# EUROPÄISCHE PATENTSCHRIFT

(11) **EP 3 489 632 B1**
(45) Veröffentlichungstag und Bekanntmachung des Hinweises auf die Patenterteilung: **14.07.2021**
(21) Anmeldenummer: 18198022.8
(22) Anmeldetag: 01.10.2018
(51) Int. Cl.: G01F 1/30, A01D 41/127, A01D 43/08

(54) **MESSVORRICHTUNG ZUR BESTIMMUNG EINES AUS SCHÜTTGUT BESTEHENDEN MASSENSTROMS**
MEASURING DEVICE FOR DETERMINING A MASS FLOW COMPRISING BULK GOODS
DISPOSITIF DE MESURE DESTINÉ À LA DÉTERMINATION D'UN DÉBIT MASSIQUE CONSTITUÉ DE PRODUIT EN VRAC

(30) Priorität: 22.11.2017 DE 102017127532
(43) Veröffentlichungstag der Anmeldung: 29.05.2019
(73) Patentinhaber: CLAAS Selbstfahrende Erntemaschinen GmbH, 33428 Harsewinkel (DE)
(72) Erfinder: Fischer, Frédéric, 59823 Arnsberg (DE); Kriebel, Bastian, 48155 Münster (DE); Quincke, Gunnar, 59494 Soest (DE); Brune, Markus, 33428 Harsewinkel (DE)
(74) Vertreter: CLAAS Gruppe

(56) Entgegenhaltungen:
- EP-A1- 0 887 008
- EP-A1- 1 518 452
- EP-A1- 1 523 874
- EP-A1- 1 570 723
- WO-A1-2016/134684
- DE-A1- 19 618 042
- US-A1- 2006 027 750
- US-B1- 6 508 049

## Beschreibung

Die vorliegende Erfindung betrifft eine Messvorrichtung zur Bestimmung eines aus, insbesondere zerkleinertem, Schüttgut bestehenden Massenstroms gemäß dem Oberbegriff des Anspruches 1.

Zur Bestimmung eines aus Schüttgut bestehenden Massenstroms, welcher von einer selbstfahrenden Erntemaschine, insbesondere einem selbstfahrenden Feldhäcksler, verarbeitet wurde, sind unterschiedliche Messverfahren bekannt. Zum einen kann der Massenstrom indirekt bestimmt werden, indem ein Volumenstrom im Einzugsbereich der Erntemaschine beispielsweise durch einen Schichthöhensensor bestimmt und zusätzlich mittels eines Feuchtigkeitssensors die Feuchtigkeit des Schüttgutes bestimmt wird, um den Einfluss der Feuchtigkeit auf die Dichte des Schüttgutes und damit die Bestimmung des Volumenstroms kompensieren zu können. Zum anderen besteht die Möglichkeit den Massenstrom direkt mittels einer Kraftmesszelle unter Berücksichtigung des Feuchtigkeitsgehaltes des Schüttgutes dichtekompensiert zu bestimmen.

Aus der EP 0 887 008 A1 ist eine Messvorrichtung gemäß dem Oberbegriff des Anspruches 1 bekannt. Eine als Feldhäcksler ausgebildete Erntemaschine weist eine Fördervorrichtung und einer der Fördervorrichtung nachgeordnete Gutaustrageinrichtung auf. Der Gutaustrageinrichtung wird ein von der Fördervorrichtung beschleunigter, aus Schüttgut bestehender Materialstrom zugeführt, der mittels der Gutaustrageinrichtung auf einen Ladewagen überladen wird. Die Gutaustrageinrichtung weist einen ersten rohrförmigen Abschnitt und zumindest einen sich daran anschließenden, abschnittsweise gekrümmten, kanalförmigen Abschnitt mit einer Gutleitfläche zur Führung des Materialstroms auf. Die Gutleitfläche ist zur Aufnahme eines Messgrößenaufnehmers einer Kraftmesszelle zur Massenstrombestimmung durch eine sich in Längsrichtung der Gutaustrageinrichtung erstreckende Öffnung abschnittsweise unterbrochen. Der relativ zur Gutaustrageinrichtung innerhalb der Öffnung in vertikaler Richtung auslenkbare Messgrößenaufnehmer ist als eine mit der Gutleitfläche der Gutaustrageinrichtung fluchtend angeordnete Sensorfläche ausgebildet, durch welche die Öffnung in dem kanalförmigen weitgehend verschlossen ist. Zwischen dem Messgrößenaufnehmer und der Öffnung in der Gutaustrageinrichtung verbleibt ein umlaufender Spalt. Die Spalte in Längsrichtung der Gutaustrageinrichtung werden jeweils durch eine zwischen der Außenkante der Sensorfläche und der Innenkante der Öffnung angeordnete Dichtung verschlossen wird. Die Dichtungen bestehen aus einem elastischen Schaummaterial. Die Sensorfläche gleitet aufgrund der vertikalen Auslenkung durch das die Sensorfläche überströmende Schüttgut entlang der beidseitig angeordneten Dichtungen. Hierzu verbleibt zwischen den die Öffnung begrenzenden Kanten der Gutaustrageinrichtung und den Außenkanten der Sensorfläche jeweils ein offener Spalt, in welche Schüttgut gelangen kann. Aufgrund der abrasiven Wirkung des bei einem Feldhäcksler mit hoher Geschwindigkeit vorbeiströmenden Schüttgutes auf das Dichtmaterial kann sich Schüttgut in dem Spalt festsetzen, wodurch die vertikale Auslenkung der Sensorfläche in der Weise beeinflusst wird, dass die Messgenauigkeit sinkt.

Ausgehend von dem vorstehend genannten Stand der Technik liegt der Erfindung die Aufgabe zugrunde, eine Messvorrichtung der eingangs genannten Art derart weiterzubilden, dass der Messwertaufnehmer ohne eine Dichtung in die Gutaustrageinrichtung integrierbar ist.

Diese Aufgabe wird erfindungsgemäß durch eine Messvorrichtung gemäß dem Anspruch 1 sowie eine selbstfahrende Erntemaschine gemäß dem Anspruch 13 gelöst.

Vorteilhafte Weiterbildungen der Erfindung sind Gegenstand der Unteransprüche.

Gemäß dem Anspruch 1 wird eine Messvorrichtung ausgeführt zur Bestimmung eines aus, insbesondere zerkleinertem, Schüttgut bestehenden Massenstroms vorgeschlagen, die eine Fördervorrichtung und eine der Fördervorrichtung nachgeordnete Gutaustrageinrichtung umfasst. Der Gutaustrageinrichtung ist ein von der Fördervorrichtung beschleunigter, aus Schüttgut bestehender Materialstrom zuführbar. Die Gutaustrageinrichtung weist einen Förderschacht und zumindest einen sich an den Förderschacht anschließenden, abschnittsweise gekrümmten kanalförmigen Abschnitt mit einer Gutleitfläche zur Führung des Materialstroms auf. Weiterhin umfasst die Messvorrichtung eine als Kraftmesszelle ausgebildete Messeinrichtung. Zur Aufnahme eines Messgrößenaufnehmers der Kraftmesszelle ist die Gutleitfläche des kanalförmigen Abschnitts abschnittsweise unterbrochen. Für eine dichtungslose Ausgestaltung der Messvorrichtung ist erfindungsgemäß vorgesehen, dass der Messgrößenaufnehmer als ein hohlzylindrischer, dem Schüttgutstrom in Umfangsrichtung vollständig umschließender, sich abschnittsweise in Strömungsrichtung der Gutaustrageinrichtung erstreckender, eine Umlenkung bewirkende Leitfläche aufweisender Gutführungsabschnitt ausgebildet ist, der relativ zu dem kanalförmigen Abschnitt der Gutaustrageinrichtung zumindest in vertikaler Richtung frei beweglich an der Kraftmesszelle angeordnet ist. Durch die hohlzylindrische Ausgestaltung des Gutführungsabschnittes wird der Schüttgutstrom in Umfangsrichtung vollständig umschlossen, so dass in Längsrichtung zwischen der Unterbrechung der Gutaustrageinrichtung und dem Messgrößenaufnehmer kein abzudichtender Längsspalt besteht, durch den Schüttgut nach außen gelangen kann. Durch den in Umfangsrichtung geschlossenen ausgeführten Messgrößenaufnehmer strömt das Schüttgut in Längsrichtung der Gutaustrageinrichtung hindurch und übt auf die Leitfläche des Gutführungsabschnittes eine Kraft aus. Der Anteil der in vertikaler Richtung auf den Gutführungsabschnitt wirkenden Kraftkomponente des Schüttgutstromes wird von der Kraftmesszelle bestimmt, indem die Auslenkung des Gutführungsabschnitts erfasst wird, die dieser durch das die Umlenkung bewirkende Gutleitfläche überströmende Schüttgut erfährt. Um eine Umlenkung zu bewirken, kann die Gutleitfläche einen Radius aufweisen oder zumindest zwei unter einem Winkel zueinander geneigte Abschnitte umfassen. Durch die hohlzylindrische, in Umfangsrichtung geschlossene Ausführung des Gutführungsabschnitts werden solche Längsfugen vermieden, die gemäß der EP 0 887 008 A1 der Abdichtung durch Dichtungselemente bedürfen. Im Unterschied zu der EP 0 887 008 A1 verhindert die in Umfangsrichtung geschlossene Ausführung des Gutführungsabschnitts, dass Erntegut zwischen den Messgrößenaufnehmer und die oberhalb des Messgrößenaufnehmers angeordnete Kraftmesszelle gelangen kann. Zudem wird die Auslenkung des Gutführungsabschnitts nicht durch eine Dichtung beeinflusst, welche sich auf das Messergebnis auswirken kann. So führt eine Veränderung der Kontur der Dichtung, insbesondere eine Ausdehnung, aufgrund von Temperatureinflüssen zu einer Beeinflussung des Messergebnisses durch auf den Gutführungsabschnitt aufgebrachte Kräfte. Auch die Frequenz der Auslenkung beeinflusst das Messergebnis, wenn zwischen dem Messgrößenaufnehmer und der Dichtung zunehmend Reibung auftritt.

Bevorzugt kann sich der Durchgangsquerschnitt des Gutführungsabschnitts in Strömungsrichtung verjüngen. Der Gutführungsabschnitt kann dabei wie eine Düse ausgeformt sein, um einen möglichst verlustfreien Materialübergang vom durch Gutführungsabschnitt unterbrochenen kanalförmigen Abschnitt in den Gutführungsabschnitt hinein und aus dem Gutführungsabschnitt heraus zurück in den kanalförmigen Abschnitt zu gewährleisten. Zudem ermöglicht die düsenförmige Ausgestaltung des Gutführungsabschnittes die störungsfreie Weiterleitung des Schüttgutes in den nachfolgenden Abschnitt der Gutaustrageinrichtung.

Insbesondere kann der Gutführungsabschnitt im Wesentlichen trichterförmig ausgebildet sein. Hierzu können vertikal verlaufende Seitenflächen des Gutführungsabschnitts, die den Schüttgutstrom seitlich begrenzen, in Strömungsrichtung gesehen unter einem Winkel aufeinander zu geneigt ausgebildet sein. Denkbar ist auch ein trapezförmiger Querschnitt des Gutführungsabschnittes. Gemäß einer alternativen Ausbildung kann vorgesehen sein, den Schüttgutstrom vor dem Gutführungsabschnitt durch eine konstruktive Maßnahme in dem kanalförmigen Abschnitt einzuschnüren und nach dem Austreten des Schüttgutstroms aus dem Gutführungsabschnitt den kanalförmigen Abschnitt wieder aufzuweiten.

Gemäß einer Ausgestaltung kann vorgesehen sein, den Schüttgutstrom vor dem Gutführungsabschnitt durch eine konstruktive Maßnahme im kanalförmigen Abschnitt der Gutaustrageinrichtung einzuschnüren und nach dem Austreten aus dem Gutführungsabschnitt den kanalförmigen Abschnitt wieder aufzuweiten.

Gemäß einer vorteilhaften Weiterbildung kann der Gutführungsabschnitt eingangsseitig eine größere Öffnungsweite aufweisen, als der vor dem Gutführungsabschnitt liegende Teil des kanalförmigen Abschnitts, und ausgangsseitig eine kleinere Öffnungsweite aufweisen, als der hinter dem Gutführungsabschnitt liegende Teil des kanalförmigen Abschnitts. Hierdurch kann vermieden werden, dass sich stufenförmige Übergänge in Strömungsrichtung des Schüttgutes ausbilden, welche die Strömung nachteilig beeinflussen und einem erhöhten Verschleiß unterliegen.

Bevorzugt kann der Gutführungsabschnitt zumindest teilweise aus einem Kunststoff bestehen. Dabei kann es sich um einen hochfesten verschleißbeständigen Kunststoff handeln. Die Ausführung des Gutführungsabschnitts aus einem Kunststoff zeichnet sich insbesondere durch ein geringes Eigengewicht aus.

Eine vorteilhafte Weiterbildung sieht vor, dass der Kraftmesszelle zumindest ein Sensor zur Bestimmung der Geschwindigkeit des Schüttgutes in der Gutaustrageinrichtung zugeordnet sein kann. Insbesondere bei einer Fördervorrichtung, welche das Schüttgut vor Einbringung in die Gutaustrageinrichtung beschleunigt, bedarf es einer Sensorik, die im Bereich der Kraftmesszelle angeordnet ist, um eine präzise Bestimmung des Massenstromes durch die Messvorrichtung zu ermöglichen. Im Gegensatz zu einem Mähdrescher, der als Fördervorrichtung einen sogenannten Kornelevator aufweist, dessen Antriebsgeschwindigkeit und damit auch die Geschwindigkeit mit der das Schüttgut im Kopfbereich des Kornelevators abgegeben wird, bekannt ist, kann die Geschwindigkeit des Schüttgutes bei der Fördervorrichtung, die das Schüttgut vor der Abgabe an die Gutaustrageinrichtung beschleunigt, stark variieren.

Zur Bestimmung der Geschwindigkeit des Schüttgutes kann der zumindest eine Sensor als ein optischer Sensor oder als ein Radarsensor ausgebildet sein. Neben einem oder zusätzlich zu einem Radarsensor kann ein Lasersensor und/oder ein Nahinfrarotspektroskopie-Sensor, der auch als NIR-Sensor bezeichnet wird, zum Einsatz kommen. Die Verwendung eines Radarsensors zur Bestimmung der Geschwindigkeit des Schüttgutes wird dadurch begünstigt, dass der Gutführungsabschnitt aus einem Kunststoff besteht. Weiterhin ist es auch möglich, die Geschwindigkeit des Ernteguts mittels einer Kamera mit Bildauswertung zu ermitteln. Dazu wird ein Partikel des Erntegutes in den aufeinanderfolgenden Bildern einer Kamera verfolgt und aus der Bildfrequenz und dem zurückgelegten Weg kann dessen Geschwindigkeit errechnet werden. Vorzugsweise kommt dabei eine Hochgeschwindigkeitskamera zum Einsatz. Die Anordnung kann dabei bevorzugt in unmittelbarer Nähe zu dem Gutführungsabschnitt erfolgen, um den örtlichen Zusammenhang zwischen der Strömungsgeschwindigkeit des Schüttgutes in dem Gutführungsabschnitt und der von dem Schüttgut auf den Gutführungsabschnitt ausgeübten Kraft zu erfassen.

Weiterhin kann der Messeinrichtung ein Neigungssensor zugeordnet sein. Mittels des Neigungssensors kann der Einfluss einer Neigungsänderung der Kraftmesszelle, die durch eine Lageänderung der Gutaustrageinrichtung hervorgerufen wird, bei der Bestimmung der die Auslenkung hervorrufenden Kraft unmittelbar berücksichtigt werden.

Bevorzugt kann der Neigungssensor in die Kraftmesszelle integriert sein. Dadurch lässt sich eine kompakte Bauweise mit kurzen Signaltransferwegen erreichen. Die Kompensation der Neigung findet dadurch bereits in der Kraftmesszelle statt. Eine abweichende Anordnung an einer geeigneten Stelle an der Gutaustrageinrichtung ist jedoch ebenfalls denkbar.

Gemäß einer vorteilhaften Weiterbildung können die Kraftmesszelle und der daran angeordnete Gutführungsabschnitt mittels einer Traverse an der Gutaustrageinrichtung angeordnet sein. Die Traverse bildet eine eigenständige Tragstruktur für die Kraftmesszelle und deren Gutführungsabschnitt sowie dem zumindest einen der Kraftmesszelle zugeordneten Sensor zur Bestimmung der Geschwindigkeit.

Insbesondere kann die Gutaustrageinrichtung aus zwei separaten kanalförmigen Abschnitten ausgebildet sein, die durch die Traverse miteinander verbindbar sind. Hierdurch lässt sich eine einfache Anordnung realisieren. Die Traverse kann als Ersatz für eine Verlängerung der Gutaustrageinrichtung fungieren.

Weiterhin wird die eingangs gestellte Aufgabe durch eine selbstfahrende Erntemaschine, insbesondere einen selbstfahrenden Feldhäcksler, gelöst, die mit einer Messvorrichtung nach einem der Ansprüche 1 bis 12 ausgebildet ist.

Die vorliegende Erfindung wird nachstehend anhand eines in den Zeichnungen dargestellten Ausführungsbeispieles näher erläutert.

Es zeigen:
- Fig. 1: einen selbstfahrenden Feldhäcksler in schematischer Seitenansicht;
- Fig. 2: eine Seitenansicht eines kanalförmigen Abschnitts einer Gutaustrageinrichtung;
- Fig. 3: eine perspektivische Teilansicht des kanalförmigen Abschnitts gemäß Fig. 2;
- Fig. 4: ein Rahmenelement und die Traverse gemäß Fig. 3 im Längsschnitt;
- Fig. 5: eine Ansicht von unten im Schnitt durch das Rahmenelement und die Traverse gemäß Fig. 3.

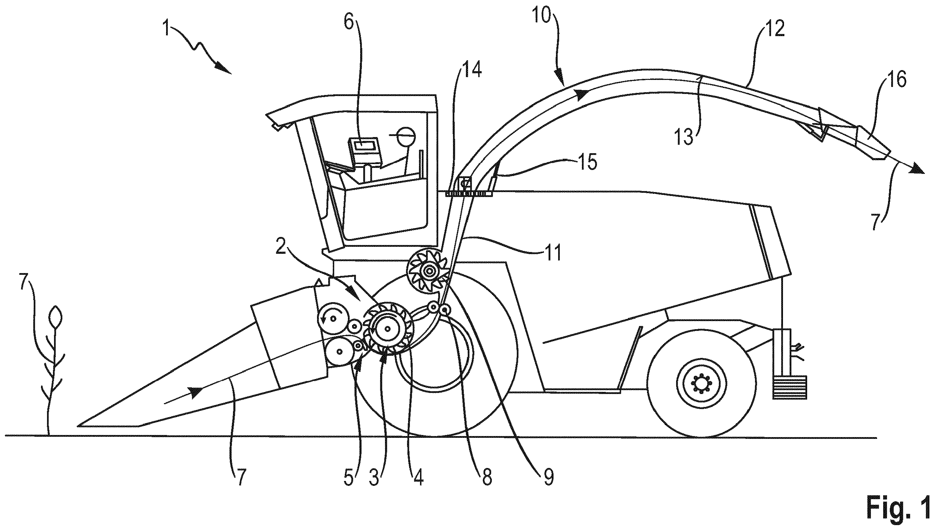

In Fig. 1 ist eine landwirtschaftliche Erntemaschine in Form eines selbstfahrenden Feldhäckslers 1 dargestellt. Der Feldhäcksler 1 weist auf für sich bekannte - und daher nicht im Einzelnen zu erläuternde - Weise übliche Merkmale eines Feldhäckslers auf. Im Erntebetrieb wird der Feldhäcksler 1 insbesondere dazu eingesetzt, von einem Vorsatzgerät abgeerntetes und aufgenommenes Erntegut 7, wie Mais oder Gras, das in Form eines vorgepressten Erntegutstrangs einem Häckselaggregat 2 zugeführt wird, zu zerkleinern ("häckseln"), um es anschließend aus dem Feldhäcksler 1 auf ein (nicht gezeigtes) Transportfahrzeug auszuwerfen. Der Weg des Ernteguts 7 durch den Feldhäcksler 1 ist in Fig. 1 durch eine mit Pfeilen versehene Linie dargestellt.

Wie in Fig. 1 zu sehen, weist das Häckselaggregat 2 eine Häckseltrommel 3 auf, die an deren Umfang mit einer Vielzahl von Messern 4 besetzt ist. Die Häckseltrommel 3 ist in der durch den Pfeil angedeuteten Drehrichtung (gemäß der Ansicht von Fig. 1 entgegen dem Uhrzeigesinn) antreibbar. Zum Antrieb dient ein von einem Antriebsmotor und einem zwischengeschalteten Getriebe (z.B. Riementrieb) gebildeter Antriebsstrang (nicht gezeigt). Das Häckselaggregat 2 weist weiterhin eine gegenüber der rotierenden Häckseltrommel 3 ruhend gelagerte Gegenschneide 5 auf. Die Gegenschneide 5 bildet mit Messern 4 der Häckseltrommel 3 einen Schneidspalt, an dem das dem Häckselaggregat 2 im Erntebetrieb zugeführte Erntegut 7 in Partikel gewünschter Schnittlänge gehäckselt wird.

Dem Häckselaggregat 2 kann eine Nachbehandlungseinrichtung 8, auch als Corn-Cracker bezeichnet, mit einem Paar Konditionier- oder Crackerwalzen 11, nachgeordnet sein, die einen Spalt von verstellbarer Breite begrenzen und mit unterschiedlichen Geschwindigkeiten rotieren, um in dem durch den Spalt hindurchtretenden Materialstrom enthaltene Maiskörner zu zerkleinern. Die Nachbehandlungseinrichtung 8 ist bei Bedarf aus dem Gutflussweg im Feldhäcksler 1 entfernbar, z.B. wenn Gras geerntet wird. Von dem Häckselaggregat 2 gelangt das zerkleinerte Erntematerial zu einem Nachbeschleuniger 9, der dem zerkleinerten und ggf. in der Nachbehandlungseinrichtung 13 konditionierten Erntematerial die notwendige Geschwindigkeit verleiht, um eine Gutaustrageinrichtung 10 zu durchlaufen und in ein (nicht dargestelltes) Begleitfahrzeug übergeladen zu werden.

Die Gutaustrageinrichtung 10 weist einen Förderschacht 11 und zumindest einen sich an den Förderschacht 11 anschließenden, abschnittsweise gekrümmten kanalförmigen Abschnitt 12 mit einer Gutleitfläche 13 zur Führung des aus zerkleinertem Erntegut 7 bestehenden Materialstroms auf. Für das Überladen auf ein Begleitfahrzeug ist der Abschnitt 12 der Gutaustrageinrichtung 10 um einen Drehkranz 14 oberhalb des Förderschachts 11 schwenkbar und mittels Hydraulikzylinder 15 neigungsveränderlich. Am Ende des Abschnitts 12 befindet sich eine Auswurfklappe 16, die um eine horizontale Achse verschwenkbar ist.

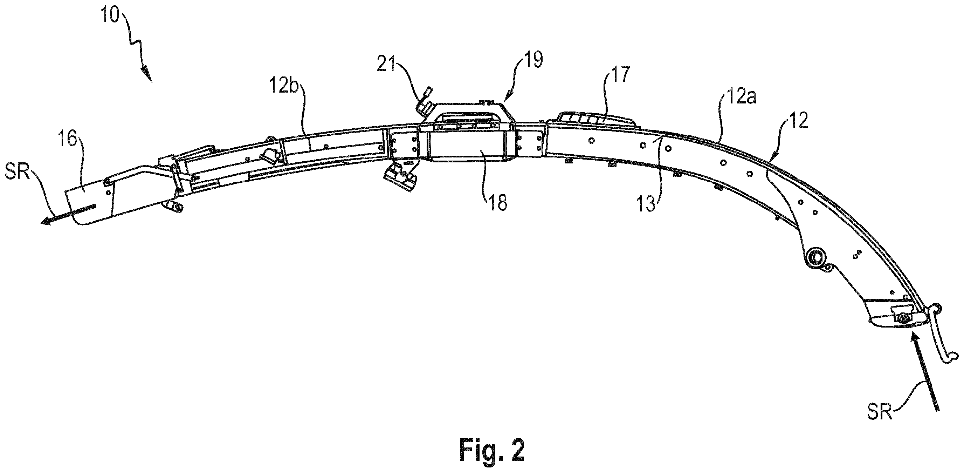

Die Darstellung in Fig. 2 zeigt einen kanalförmigen Abschnitt 12 einer Gutaustrageinrichtung 11 in einer Seitenansicht. Auf dem kanalförmigen Abschnitt 12 kann zumindest ein Sensor 17 angeordnet sein, der als Feuchtesensor und/oder Inhaltsstoffsensor, beispielsweise NIR-Sensor, ausgeführt sein kann. Der kanalförmige Abschnitt 12 ist durch eine Unterteilung in zwei separate Abschnitte, einen ersten Abschnitt 12a und einen zweiten Abschnitt 12b, unterbrochen, welche durch ein im Wesentlichen U-förmiges Rahmenelement 18 miteinander verbindbar sind. Dem Rahmenelement 18 gegenüberliegend ist eine Traverse 19 angeordnet, welche das Rahmenelement 18 obenseitig abdeckt. Das Rahmenelement 18 und die Traverse 19 können anstelle eines Verlängerungsabschnitts zwischen den beiden Abschnitten 12a und 12b eingesetzt werden. Mit einem Pfeil SR wird die Strömungsrichtung des Materialstroms bezeichnet, welcher durch den Nachbeschleuniger 9 beschleunigt durch den Förderschacht 11 in die Gutaustrageinrichtung 10 gelangt.

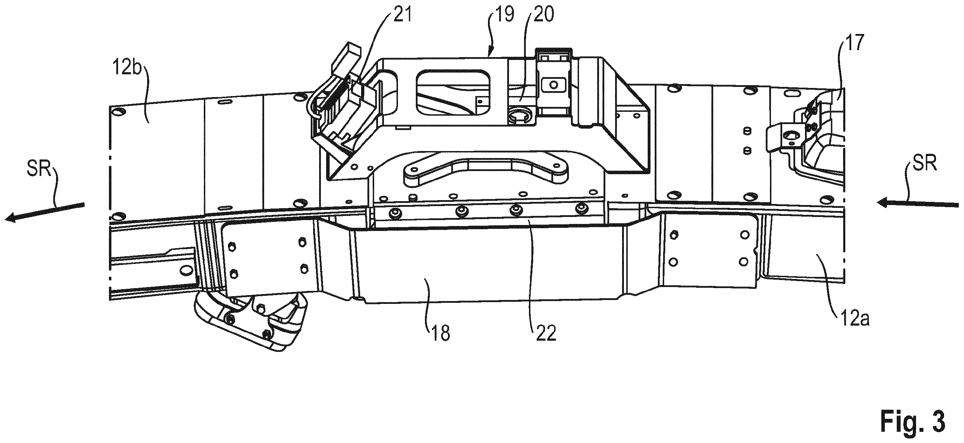

In Fig. 3 ist eine perspektivische Teilansicht des kanalförmigen Abschnitts 12 gemäß Fig. 2 dargestellt. Die Traverse 19 dient der Aufnahme einer Kraftmesszelle 20 sowie eines Geschwindigkeitssensors 21, der im dargestellten Ausführungsbeispiel als ein Radarsensor ausgeführt ist. Mit der Kraftmesszelle 20 ist ein als Messwertaufnehmer ausgeführter hohlzylindrischer Gutführungsabschnitt 22 verbunden, der zumindest in vertikaler Richtung frei beweglich ist. Der Gutführungsabschnitt 22 erstreckt sich zwischen den einander zugewandten Öffnungen der beiden Abschnitte 12a, 12b der Gutaustrageinrichtung 10.

Der Gutführungsabschnitt 22 ist in Strömungsrichtung SR gesehen in Umfangsrichtung geschlossen ausgeführt, d.h. in Längsrichtung der Traverse 19 bilden sich keine abzudichtenden Längsspalte aus, durch die Erntematerial austreten könnte. In die Kraftmesszelle 20 ist ein Neigungssensor integriert, welcher eine Änderung der Neigung der Kraftmesszelle 20 bzw. des Gutführungsabschnitts 22 erfasst, welche durch eine Lageänderung der Gutaustrageinrichtung 10 hervorgerufen wird. Die Neigungsänderung der Gutaustrageinrichtung 10 kann somit bei der Bestimmung der die Auslenkung des Gutführungsabschnitts 22 hervorrufenden Kraft unmittelbar berücksichtigt werden.

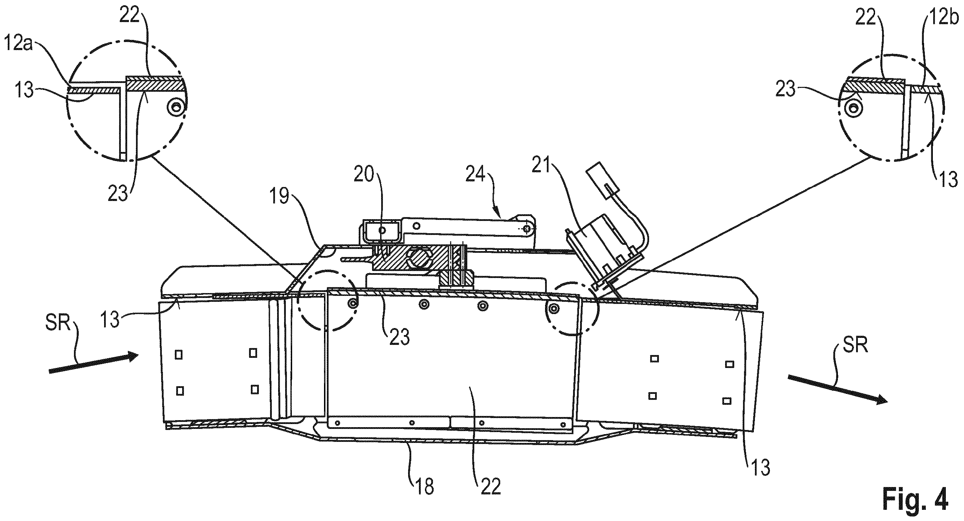

Fig. 4 zeigt das Rahmenelement 18 und die Traverse 19 im Längsschnitt. Der Gutführungsabschnitt 22 ist mit der Kraftmesszelle 20 in der Weise verbunden, dass dieser gegenüber den beiden Abschnitten 12a ,12b frei beweglich ist. Zumindest eine die Unterbrechung der Gutleitfläche 13 zwischen den beiden Abschnitten 12a, 12b überbrückende, horizontal verlaufende Leitfläche 23 des Gutführungsabschnitts 22, welches eine Umlenkung bewirkt, weist eine Krümmung mit einem Radius oder einen Umlenkwinkel auf. Hierdurch wird eine Umlenkung des Materialstromes erreicht, die zwischen 2° und 10° beträgt, besonders bevorzugt beträgt die Umlenkung durch die Leitfläche zwischen 3° und 5°. Die Krümmung bzw. der Umlenkwinkel der Leitfläche 23 des Gutführungsabschnitts 22 ist notwendig, um durch die Umlenkung des Materialstromes entlang der Leitfläche 23 eine messbare Auslenkung in vertikaler Richtung zu bewirken. Die Auslenkung ist proportional zu einer Kraft, welche in Verbindung mit der durch den Geschwindigkeitssensor 21 bestimmbaren Strömungsgeschwindigkeit zur Bestimmung des Massenstroms durch eine Steuerungsvorrichtung 6 des Feldhäckslers 1 herangezogen wird. Hierzu sind die Kraftmesszelle 20 sowie der Geschwindigkeitssensor 21 durch Signalleitungen mit der Steuerungsvorrichtung 6 verbunden. Mit der Traverse 19 kann die Kraftmesszelle 20 durch eine Einstelleinrichtung 24 verbunden sein, die eine Feinjustage zur Ausrichtung der Kraftmesszelle 20 und dem daran angeordneten Gutführungsabschnitt 22 gegenüber den Abschnitten 12a, 12b dient.

In Fig. 4 vergrößert dargestellte Detailansichten A und B zeigen jeweils einen Übergangsbereich zwischen dem in Strömungsrichtung SR gesehen vor dem Gutführungsabschnitt 22 liegenden Teil des ersten Abschnitts 12a und dem hinter dem Gutführungsabschnitt 22 liegenden Teil des zweiten Abschnitts 12b des kanalförmigen Abschnitts 12 der Gutaustrageinrichtung 10.

Wie anhand der Detailansichten A und B gemäß Fig. 4 erkennbar ist, weist der Gutführungsabschnitt 22 eingangsseitig eine größere Öffnungsweite auf, als der vor dem Gutführungsabschnitt 22 liegende Teil des ersten Abschnitts 12a, und ausgangsseitig eine kleinere Öffnungsweite, als der hinter dem Gutführungsabschnitt 22 liegende Teil des zweiten Abschnitts des kanalförmigen Abschnitts 12.

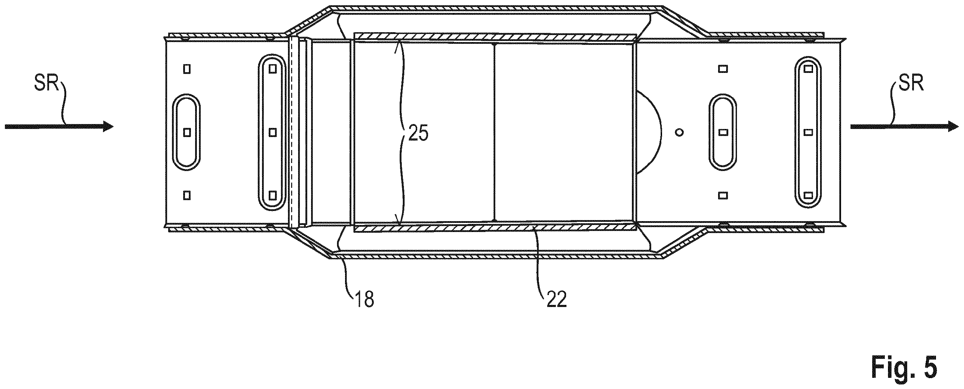

Fig. 5 zeigt eine Ansicht von unten im Schnitt durch das Rahmenelement 18 und die Traverse 19 gemäß Fig. 3. Vertikal verlaufende Seitenflächen 25 des Gutführungsabschnitts 22, die den Materialstrom aus zerkleinertem Erntegut 7 seitlich begrenzen, sind in Strömungsrichtung SR gesehen unter einem Winkel aufeinander zu geneigt ausgebildet. Insgesamt ergibt sich dadurch eine im Wesentlichen trichterförmige oder düsenförmige Kontur des Gutführungsabschnitts 22, dessen Durchgangsquerschnitt sich in Strömungsrichtung SR verjüngt. Die im Übergangsbereich von dem ersten Abschnitt 12a in den Gutführungsabschnitts 22 vorgesehene Aufweitung des Gutführungsabschnitts 22 und die gegenüber dem sich anschließenden zweiten Abschnitt 12b vorgesehene Einschnürung sorgt für einen störungs- und verlustfreien Übergang des Materialstrom. Zwischen den Übergängen zum und vom Gutführungsabschnitts 22 aufgrund der freibeweglichen Anordnung des Gutführungsabschnitt 22 sich ausbildende quer zur Strömungsrichtung SR verlaufenden Spalten wirken sich wegen der hohen Strömungsgeschwindigkeit und der Ausgestaltung der Übergänge nicht in einer Weise aus, wie dies bei einem Vorhandensein von Längsspalten der Fall wäre. Auf eine entsprechende Abdichtung dieser Querspalten kann somit verzichtet werden.

### Bezugszeichenliste

- 1: Feldhäcksler
- 2: Häckselaggregat
- 3: Häckseltrommel
- 4: Messer
- 5: Gegenschneide
- 6: Steuerungsvorrichtung
- 7: Erntegut
- 8: Nachbehandlungseinrichtung
- 9: Nachbeschleuniger
- 10: Austrageinrichtung
- 11: Förderschacht
- 12: Kanalförmiger Abschnitt
- 12a: Erster Abschnitt
- 12b: Zweiter Abschnitt
- 13: Gutleitfläche
- 14: Drehkranz
- 15: Hydraulikzylinder
- 16: Auswurfklappe
- 17: Sensor
- 18: Rahmenelement
- 19: Traverse
- 20: Kraftmesszelle
- 21: Geschwindigkeitssensor
- 22: Gutführungsabschnitt
- 23: Leitfläche
- 24: Einstelleinrichtung
- 25: Seitenfläche

- SR: Strömungsrichtung

## Patentansprüche

1. Messvorrichtung ausgeführt zur Bestimmung eines aus, insbesondere zerkleinertem, Schüttgut bestehenden Massenstroms, mit einer Fördervorrichtung (9) und einer der Fördervorrichtung (9) nachgeordneten Gutaustrageinrichtung (10), welcher ein von der Fördervorrichtung (9) beschleunigter, aus Schüttgut bestehender Materialstrom (7) zuführbar ist, wobei die Gutaustrageinrichtung (10) einen Förderschacht (11) und zumindest einen sich an den Förderschacht (11) anschließenden, abschnittsweise gekrümmten kanalförmigen Schacht (12) mit einer Gutleitfläche (12) zur Führung des Materialstroms (7) aufweist, sowie eine Kraftmesszelle (20), wobei die Gutleitfläche (12) zur Aufnahme eines Messgrößenaufnehmers der Kraftmesszelle (20) abschnittsweise unterbrochen ist, **dadurch gekennzeichnet, dass** der Messgrößenaufnehmer als ein hohlzylindrischer, den Schüttgutstrom in Umfangsrichtung vollständig umschließender, sich abschnittsweise in Strömungsrichtung der Gutaustrageinrichtung (10) erstreckender, eine Umlenkung bewirkende Leitfläche (23) aufweisender Gutführungsabschnitt (22) ausgebildet ist, der relativ zu dem kanalförmigen Schacht (12) der Gutaustrageinrichtung (10) zumindest in vertikaler Richtung frei beweglich an der Kraftmesszelle (20) angeordnet ist.

2. Messvorrichtung nach Anspruch 1, **dadurch gekennzeichnet, dass** sich der Durchgangsquerschnitt des Gutführungsabschnitts (22) in Strömungsrichtung (SR) verjüngt.

3. Messvorrichtung nach Anspruch 2, **dadurch gekennzeichnet, dass** der Gutführungsabschnitt (22) im Wesentlichen trichterförmig ausgeführt ist.

4. Messvorrichtung nach Anspruch 1, **gekennzeichnet dadurch**, den Schüttgutstrom vor dem Gutführungsabschnitt (22) durch eine konstruktive Maßnahme im kanalförmigen Abschnitt einzuschnüren und nach dem Austreten aus dem Gutführungsabschnitt (22) den kanalförmigen Abschnitt wieder aufzuweiten.

5. Messvorrichtung nach einem der Ansprüche 1 bis 4, **dadurch gekennzeichnet, dass** der Gutführungsabschnitt (22) eingangsseitig eine größere Öffnungsweite aufweist, als ein vor dem Gutführungsabschnitt (22) liegender Teil des kanalförmigen Abschnitts (12) und ausgangsseitig eine kleinere Öffnungsweite aufweist, als ein hinter dem Gutführungsabschnitt (22) liegender Teil des kanalförmigen Abschnitts (12).

6. Messvorrichtung nach einem der vorangehenden Ansprüche, **dadurch gekennzeichnet, dass** der Gutführungsabschnitt (22) zumindest teilweise aus einem Kunststoff besteht.

7. Messvorrichtung nach einem der vorangehenden Ansprüche, **dadurch gekennzeichnet, dass** der Kraftmesszelle (20) zumindest ein Sensor (21) zur Bestimmung der Geschwindigkeit des Schüttgutes in der Gutaustrageinrichtung (10) zugeordnet ist.

8. Messvorrichtung nach Anspruch 7, **dadurch gekennzeichnet, dass** der zumindest eine Sensor als ein optischer Sensor oder als ein Radarsensor (21) ausgebildet ist.

9. Messvorrichtung nach einem der vorangehenden Ansprüche, **dadurch gekennzeichnet, dass** der Kraftmesszelle (20) ein Neigungssensor zugeordnet ist.

10. Messvorrichtung nach Anspruch 9, **dadurch gekennzeichnet, dass** der Neigungssensor in die Kraftmesszelle (20) integriert ist.

11. Messvorrichtung nach einem der vorangehenden Ansprüche, **dadurch gekennzeichnet, dass** die Kraftmesszelle (20) und der daran angeordnete Gutführungsabschnitt (22) mittels einer Traverse (19) an dem kanalförmigen Abschnitt (12) der Gutaustrageinrichtung (10) angeordnet sind.

12. Messvorrichtung nach einem der vorangehenden Ansprüche, **dadurch gekennzeichnet, dass** die Gutaustrageinrichtung (10) aus zwei separaten kanalförmigen Abschnitten (12a, 12b) bestehend ausgebildet ist, die durch die Traverse (19) miteinander verbindbar sind.

13. Selbstfahrende Erntemaschine, insbesondere selbstfahrender Feldhäcksler (1), mit einer Messvorrichtung die nach einem der Ansprüche 1 bis 12 ausgebildet ist.

## Claims

1. A measuring device constructed for determining a mass flow consisting of bulk material, in particular comminuted bulk material, having a conveying device (9) and a crop discharge means (10) downstream of the conveying device (9), to which a flow of material (7) consisting of bulk material accelerated from the conveying device (9) can be fed, wherein the crop discharge means (10) has a conveyor shaft (11) and at least one duct-shaped shaft (12) which is connected to the conveyor shaft (11) and is curved in sections, having a crop guiding surface (12) for feeding the flow of material (7), as well as a load cell (20), wherein sections of the crop guiding surface (12) are interrupted in order to receive a transducer of the load cell (20), **characterized in that** the transducer is configured as a hollow cylindrical crop feeding section (22) which completely surrounds the bulk material flow in the circumferential direction, with sections which extend in the direction of flow of the crop discharge means (10) and which has a guiding surface (23) which acts as a deflector which, relative to the duct-shaped shaft (12) of the crop discharge means (10) is disposed so as to be freely movable on the load cell (20) in at least the vertical direction.

2. The measuring device according to claim 1, **characterized in that** the cross section of flow of the crop feeding section (22) tapers in the direction of flow (SR).

3. The measuring device according to claim 2, **characterized in that** the crop feeding section (22) is substantially in the shape of a hopper.

4. The measuring device according to claim 1, **characterized by** constricting the flow of bulk material in front of the crop feeding section (22) by a structural means in the duct-shaped section and by widening the duct-shaped section again after exiting the crop feeding section (22).

5. The measuring device according to one of claims 1 to 4, **characterized in that** the crop feeding section (22) has a larger opening width on the inlet side than a portion of the duct-shaped section (12) positioned in front of the crop feeding section (22) and has a smaller opening width on the outlet side than a portion of the duct-shaped section (12) positioned behind the crop feeding section (22).

6. The measuring device according to one of the preceding claims, **characterized in that** at least a portion of the crop feeding section (22) consists of a plastic.

7. The measuring device according to one of the preceding claims, **characterized in that** at least one sensor (21) for determining the speed of the bulk material in the crop discharge means (10) is associated with the load cell (20).

8. The measuring device according to claim 7, **characterized in that** the at least one sensor is configured as an optical sensor or as a radar sensor (21).

9. The measuring device according to one of the preceding claims, **characterized in that** an inclination sensor is associated with the load cell (20).

10. The measuring device according to claim 9, **characterized in that** the inclination sensor is integrated into the load cell (20).

11. The measuring device according to one of the preceding claims, **characterized in that** the load cell (20) and the crop feeding section (22) associated therewith are disposed on the duct-shaped section (12) of the crop discharge means (10) by means of a cross member (19).

12. The measuring device according to one of the preceding claims, **characterized in that** the crop discharge means (10) is constructed from two separate duct-shaped sections (12a, 12b) which can be connected together by means of the cross member (19).

13. A self-propelled harvesting machine, in particular a self-propelled forage harvester (1), having a measuring device configured according to one of claims 1 to 12.

## Revendications

1. Dispositif de mesure conçu pour déterminer un débit massique constitué de produit en vrac, en particulier broyé, comprenant un dispositif de convoyage (9) et un équipement d'éjection de produit (10) qui est disposé en aval du dispositif de convoyage (9) et auquel peut être amené un flux de matière (7) accéléré par le dispositif de convoyage (9) et constitué de produit en vrac, l'équipement d'éjection de produit (10) comportant une colonne d'amenée (11) et au moins une colonne (12) raccordée à la colonne d'amenée (11), en forme de canal, coudée par portions, comprenant une surface de guidage de produit (12) pour guider le flux de matière (7), ainsi qu'une cellule dynamométrique (20), la surface de guidage de produit (12) étant interrompue par portions pour recevoir un releveur de grandeurs de mesure de la cellule dynamométrique (20), **caractérisé en ce que** le releveur de grandeurs de mesure est conçu sous la forme d'une portion cylindrique creuse de guidage de produit (22) qui entoure entièrement le flux de produit en vrac dans la direction circonférentielle, s'étend par portions dans la direction d'écoulement de l'équipement d'éjection de produit (10) et comporte une surface directrice (23) provoquant une déviation et qui est montée sur la cellule dynamométrique (20) avec la possibilité de se déplacer librement au moins dans la direction verticale par rapport à la colonne en forme de canal (12) de l'équipement d'éjection de produit (10) .

2. Dispositif de mesure selon la revendication 1, **caractérisé en ce que** la section de passage de la portion de guidage de produit (22) se rétrécit dans la direction d'écoulement (SR).

3. Dispositif de mesure selon la revendication 2, **caractérisé en ce que** la portion de guidage de produit (22) est conçue sensiblement en forme d'entonnoir.

4. Dispositif de mesure selon la revendication 1, **caractérisé en ce que** le flux de produit en vrac est resserré avant la portion de guidage de produit (22) par l'intermédiaire d'une mesure constructive dans la portion en forme de canal et la portion en forme de canal est à nouveau élargie après la sortie de la portion de guidage de produit (22).

5. Dispositif de mesure selon une des revendications 1 à 4, **caractérisé en ce que** la portion de guidage de produit (22) comporte, côté entrée, une largeur d'ouverture plus grande qu'une partie de la portion en forme de canal (12) située avant la portion de guidage de produit (22) et, côté sortie, une largeur d'ouverture plus petite qu'une partie de la portion en forme de canal (12) située après la portion de guidage de produit (22) .

6. Dispositif de mesure selon une des revendications précédentes, **caractérisé en ce que** la portion de guidage de produit (22) est constituée au moins en partie de matière synthétique.

7. Dispositif de mesure selon une des revendications précédentes, **caractérisé en ce qu'**à la cellule dynamométrique (20) est associé au moins un capteur (21) pour déterminer la vitesse du produit en vrac dans l'équipement d'éjection de produit (10).

8. Dispositif de mesure selon la revendication 7, **caractérisé en ce que** le au moins un capteur est conçu sous la forme d'un capteur optique ou d'un capteur radar (21).

9. Dispositif de mesure selon une des revendications précédentes, **caractérisé en ce qu'**à la cellule dynamométrique (20) est associé un capteur d'inclinaison.

10. Dispositif de mesure selon la revendication 9, **caractérisé en ce que** le capteur d'inclinaison est intégré à la cellule dynamométrique (20).

11. Dispositif de mesure selon une des revendications précédentes, **caractérisé en ce que** la cellule dynamométrique (20) et la portion de guidage de produit (22) montée dessus sont disposées sur la portion en forme de canal (12) de l'équipement d'éjection de produit (10) au moyen d'une traverse (19).

12. Dispositif de mesure selon une des revendications précédentes, **caractérisé en ce que** l'équipement d'éjection de produit (10) est conçu en étant constitué de deux portions séparées en forme de canal (12a, 12b) qui peuvent être reliées entre elles par l'intermédiaire de la traverse (19).

13. Machine de récolte automotrice, en particulier ensileuse automotrice (1), comprenant un dispositif de mesure qui est conçu selon une des revendications 1 à 12.
